Europäisches Patentamt

European Patent Office

Office européen des brevets

(19)

(11) Numéro de publication: **0 194 953**
B1

(12)

# FASCICULE DE BREVET EUROPEEN

(45) Date de publication du fascicule du brevet:
**25.04.90**

(21) Numéro de dépôt: **86420064.7**

(22) Date de dépôt: **27.02.86**

(51) Int. Cl.⁴: **G01D 5/24**, G01P 15/08,
G01L 9/00

(54) Capteur intégré de grandeurs mécaniques à effet capacitif et procédé de fabrication.

(30) Priorité: **01.03.85 FR 8503254**

(43) Date de publication de la demande:
**17.09.86 Bulletin 86/38**

(45) Mention de la délivrance du brevet:
**25.04.90 Bulletin 90/17**

(84) Etats contractants désignés:
**DE GB IT**

(56) Documents cités:
EP-A- 0 049 344
EP-A- 0 054 707
DE-A- 3 013 770
DE-A- 3 201 198
DE-A- 3 325 961

(73) Titulaire: **METRAVIB S.A., 64, Chemin des Mouilles
B.P. 182, F-69132 Ecully Cedex(FR)**

(72) Inventeur: **Andre, Pierre, Louis, 39, rue Albéric Pont,
F-69005 Lyon(FR)**
Inventeur: **Bailleu, François Gabriel, 36, Avenue du Coin
du Bois, F-78120 Rambouillet(FR)**
Inventeur: **Brosselard, Jean-Pierre Yves, 2, Passage
Championnet, F-75018 Paris(FR)**
Inventeur: **Dreyfus, Gérard Résidence Bel Air - Bt. 2, Rue
du Viaduc Villebon/Yvette, F-91120 Palaiseau(FR)**
Inventeur: **Permuy, Alfred, Groupe "Les Calilois"
-Bt 8 Chemin des Campanules, F-13012 Marseille(FR)**
Inventeur: **Pirot, François-Xavier, 17, Avenue Docteur
Netter, F-75012 Paris(FR)**
Inventeur: **Spirkovitch, Serge, 68, rue des Cévennes,
F-75015 Paris(FR)**

(74) Mandataire: **Ropital-Bonvarlet, Claude et al, Cabinet
BEAU DE LOMENIE 99, Grande rue de la Guillotière,
F-69007 Lyon(FR)**

## Description

La présente invention concerne un capteur intégré de grandeurs mécaniques à effet capacitif, comprenant un substrat semi-conducteur monolithique muni d'une première électrode, une lame flexible qui est réalisée dans un matériau non entièrement métallique et définit avec le substrat un espace libre et qui est susceptible de subir de faibles déplacements, de manière à modifier légèrement la position relative de la lame par rapport au substrat en l'absence de résonance de la lame; une seconde électrode disposée sur la face de la lame opposée audit espace libre et des moyens de détection d'un signal électrique significatif représentatif des variations de position de ladite lame flexible.

Dans de nombreux domaines d'application, il est nécessaire d'utiliser des capteurs de grandeurs mécaniques, telles que force, accélération, pression, destinés à délivrer des signaux électriques représentatifs des grandeurs mesurées et devant être appliqués à des chaînes électroniques de traitement, afin de permettre des mesures, contrôles, régulations ou asservissements automatiques.

On connaît divers capteurs traditionnels, tels que des capteurs piézoélectriques, des jauges de contrainte, des capteurs inductifs ou des capteurs capacitifs, qui délivrent un signal électriques dont la valeur varie en fonction des variations de position d'un élément mobile sous l'action d'une force extérieure.

Ainsi, la demande de brevet EP-A 49 344 décrit un transducteur de pression à effet capacitif comprenant un diaphragme mobile conducteur en matériau semi-conducteur et une membrane métallique perforée disposée de manière qu'une cavité soit ménagée entre la membrane et le diaphragme qui définissent un condensateur.

Dans le même sens, la demande de brevet allemand DE-A 3 325 961 divulgue un transducteur électro-acoustique capacitif utilisant une membrane en silicium ou dioxyde de silicium et pouvant être intégré sur un substrat sur lequel sont également formés des composants électroniques.

Ces deux transducteurs qui ne se trouvent pas directement combiner avec des moyens de détection d'un signal électrique, présentent l'inconvénient d'être peu sensibles et peu fiables.

Un autre type de capteur de pression est décrit dans la demande de brevet allemand DE-A 3 013 770. Ce capteur comporte une poutre en porte-à-faux suspendue au-dessus d'un substrat dans lequel une structure d'un transistor à effet de champ (FET) est réalisée. La poutre s'étend plus particulièrement au-dessus du canal délimité par les zones de drain et de source du transistor.

Ce capteur, qui constitue un vibromètre, possède une fréquence de mesure déterminée par construction.

Le principe de ce capteur est basé sur l'effet transistor d'une structure métal isolant semi-conducteur dont la grille entre en résonance mécanique lorsqu'elle est excitée par une vibration à sa fréquence propre.

Ce capteur, par le fait même qu'il mesure des vibrations uniquement dans une faible bande autour de la résonance de la grille, ne constitue pas un capteur d'accélération dont la fréquence s'étend de zéro jusqu'à une valeur légèrement inférieure à la résonance de la lame. De plus, ce capteur est coûteux à fabriquer, compte tenu de l'assemblage de pièces mécaniques devant être usinées avec une très grande précision.

Afin de diminuer ces inconvénients et accroître la compatibilité avec les circuits électroniques de traitement numérique associés aux capteurs, il a déjà été proposé de réaliser des accéléromètres intégrés comprenant une petite poutre en porte-à-faux formée dans une pastille de silicium, afin de constituer, au sein même d'un circuit intégré, un élément sensible à des accélérations perpendiculaires aux surfaces de la pastille de silicium pour provoquer des variations de capacité qui sont utilisées pour commander un transistor MOS de détection formé sur la même pastille de silicium au voisinage de l'élément sensible constituant le capteur proprement dit.

Dans un tel type de réalisation de capteur intégré, une couche dopée au bore, servant de première électrode et de couche d'arrêt d'attaque chimique, est d'abord réalisée dans le substrat de silicium. Après formation d'une couche épitaxiale sur la couche dopée au bore et délimitation d'une zone devant former une lame flexible en forme de poutre en porte-à-faux, une attaque chimique anisotrope est réalisée pour dégager un espace libre sous la poutre et autour de celle-ci, l'attaque chimique étant arrêtée par la couche dopée au bore précédemment formée.

Un tel mode de réalisation présente des inconvénients, dans la mesure où, du fait de l'attaque chimique anisotrope, l'espace libre formé sous la poutre flexible est mal délimité et demeure trop important, ce qui affecte la reproductibilité et limite la sensibilité du capteur. Par ailleurs, des zones de source et de drain d'une structure MOS doivent être formées sur la pastille de silicium dans des régions relativement éloignées de l'élément capacitif sensible constitué par la couche dopée au bore formant première électrode, l'espace libre situé sous la poutre et une seconde électrode formée sur la poutre elle-même. Ceci augmente les capacités parasites et contribue à diminuer encore la sensibilité du système.

La présente invention vise à remédier aux inconvénients précités et à permettre la réalisation d'un capteur intégré qui soit facile à fabriquer, d'une manière aisée et reproductible, à un faible coût, tout en présentant des caractéristiques améliorées de fiabilité, de sensibilité et de précision dans les mesures.

Ces buts sont atteints grâce à un capteur intégré de grandeurs mécaniques, tel que défini en tête de la description, dans lequel, conformément à l'invention, les moyens de détection d'un signal électrique significatif comprennent des première et seconde zones de diffusion de source et de drain non contiguës, séparées par un canal et formées parallèlement à la lame dans la partie supérieure du substrat et des électrodes reliées, respectivement, à la zone de source et à la zone de drain, de manière à créer une structure du type métal isolant-semi-conducteur dont l'électrode mobile constitue la grille et l'espace libre situé entre la lame et le substrat présente une épaisseur comprise entre environ 0,2 et 3 μm et, de préférence, voisine de 1 μm.

Avantageusement, la lame flexible est en oxyde ou nitrure de silicium et le capteur intégré peut comprendre, en outre, par effet électret, une concentration de charges réparties dans la lame.

Ceci permet d'utiliser le capteur avec les faibles tensions de polarisation utilisées habituellement avec les circuits intégrés.

Ainsi, dans ce cas, les première et seconde électrodes sont reliées à une même potentiel et les électrodes associées aux zones de source et de drain sont prévues pour être reliées au circuit série constitué par une source de polarisation basse tension et un appareil de mesure de courant.

Selon une autre variante de réalisation, une structure à appauvrissement est créée entre les zones de diffusion de drain et de source par formation d'un canal supplémentaire faiblement dopé entre ces zones de diffusion.

La lame flexible peut présenter, par exemple, une longueur comprise entre, environ, 50 et 400 μm et une épaisseur comprise entre, environ, 0,5 et 2 μm.

La lame flexible peut être en porte-à-faux ou présenter, à ses deux extrémités, des points de liaison avec la structure fixe du capteur.

Le capteur selon l'invention peut être appliqué en tant qu'accéléromètre, mais peut, également, être appliqué à la mesure de forces ou de pressions ou de toutes grandeurs transformables en force ou déplacement.

La lame flexible peut être incorporée dans une membrane souple en silicium et ladite membrane est soudée à sa périphérie sur une couche en silicium polycristallin, elle-même déposée sur le substrat, de telle manière que la lame subisse des déplacements liés à la force ou la pression exercées sur la face extérieure de la membrane souple.

La membrane souple est constituée par une plaquette de silicium, oxydée ou non, qui est amincie, au moins dans sa partie centrale, pour présenter une épaisseur comprise entre environ 1 et 40 μm, les dimensions latérales comme l'épaisseur étant choisies en rapport avec la souplesse requise pour le corps d'épreuve.

L'invention concerne, également, un capteur intégré de grandeurs mécaniques à effet capacitif, comprenant un mince substrat semiconducteur monolithique muni d'une première électrode ; une lame réalisée en un matériau non métallique et définissant avec le substrat un espace libre ; une seconde électrode disposée sur la face de la lame opposée audit espace libre et des moyens de détection d'un signal électrique significatif représentatif des variations de position relative du substrat et de la lame, caractérisé en ce que le mince substrat est flexible et susceptible de subir de faibles déplacements, de manière à constituer le corps d'épreuve et à modifier légèrement la position relative du substrat par rapport à la lame en l'absence de résonance du substrat, en ce que lesdits moyens de détection d'un signal électrique significatif comprennent des première et seconde zones de diffusion de source et de drain, non contiguës, séparées par un canal et formées parallèlement à la lame dans la partie supérieure du substrat et des électrodes reliées, respectivement, à la zone de source et à la zone de drain, de manière à créer une structure du type métal isolant semi-conducteur dont la seconde électrode constitue la grille et en ce que l'espace libre, situé entre la lame et le substrat, présente une épaisseur comprise entre environ 0,2 et 3 μm et, de préférence, voisine de 1 μm.

L'invention a encore pour objet un procédé de fabrication d'un capteur intégré de grandeurs mécaniques à effet capacitif, comprenant les étapes suivantes:

a) formation de deux zones diffusées parallèles non contiguës, formant source et drain dans un substrat semi-conducteur en silicium monocristallin, selon les technologies des structures MOS,

b) croissance d'une mince couche d'oxyde thermique sur le substrat muni de ses deux zones de source et de drain,

c) dépôt d'une couche de polysilicium d'une épaisseur correspondant à l'épaisseur de l'espace libre à former dans le capteur,

c1) dépôt ou croissance d'une couche d'oxyde ou de nitrure de silicium sur la couche de polysilicium,

d) formation de trous de contact vers les régions de drain et de source,

e) métallisation d'une partie de la surface de la couche d'oxyde ou de nitrure de silicium pour former l'électrode allongée et les chemins conducteurs de liaison à l'électrode allongée et aux électrodes de drain et de source,

e1) photogravure de la couche d'oxyde ou de nitrure de silicium pour former deux trous de part et d'autre de l'électrode allongée, ainsi que, le cas échéant, au voisinage de l'extrémité libre de l'électrode,

f) attaque isotrope au plasma de la couche de silicium polycristallin pour former un espace libre entre la lame flexible et la mince couche d'oxyde thermique formant couche d'arrêt et pour éliminer le silicium polycristallin dans une zone s'étendant au-delà des bords longitudinaux de l'électrode et, le cas échéant, de l'extrémité libre de l'électrode.

Après l'étape f) d'attaque au plasma de la couche de silicium polycristallin, on peut procéder à une implantation de charges électriques dans la lame au voisinage de sa face opposée à l'électrode allongée pour créer un effet électret.

D'autres avantages de la présente invention ressortiront de la description suivante de modes particuliers de réalisation, en référence aux dessins annexés, sur lesquels:

- la fig. 1 est une vue schématique en coupe montrant le principe d'un capteur intégré selon l'invention.
- la fig. 2 est une vue simplifiée de dessus du capteur de la fig. 1, à une autre échelle,
- la fig. 3 est une vue en perspective et partiellement en coupe d'un exemple de capteur intégré selon l'invention,

- les fig. 4a à 4d représentent des vues schématiques en coupe d'un capteur intégré selon l'invention au cours des étapes successives de sa fabrication,

- les fig. 5 à 8 montrent des vues schématiques en coupe d'un capteur intégré selon l'invention, plus particulièrement adapté à des mesures de force ou de pression et,

- les fig. 9 et 10 montrent, schématiquement, en vue de dessus, des variantes de réalisation du capteur selon l'invention.

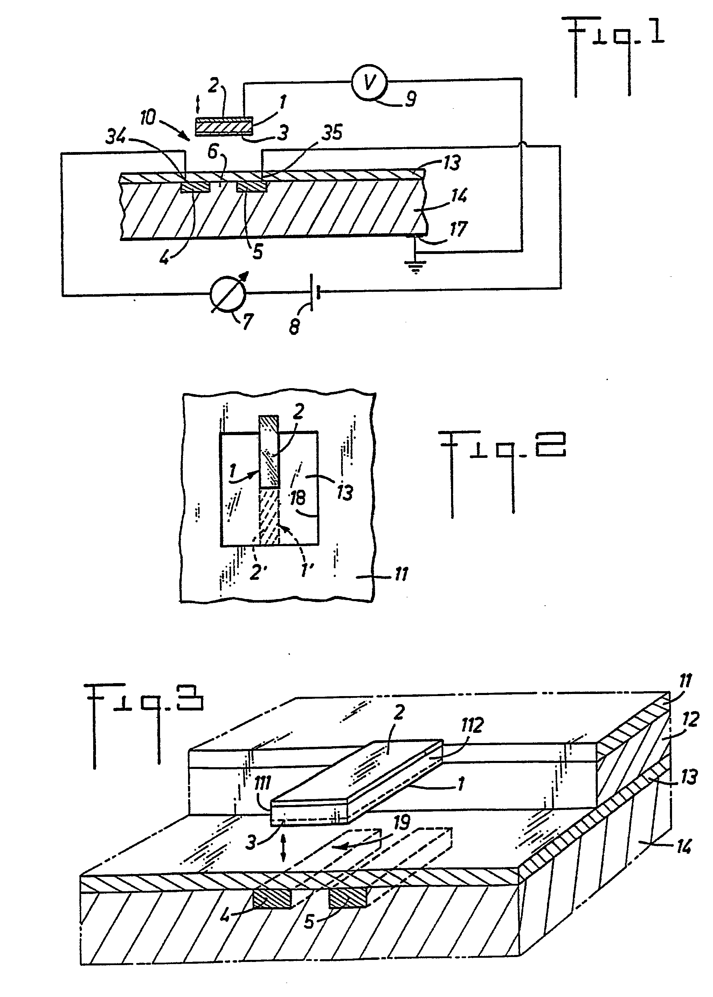

On voit, sur les fig. 1 à 3, la structure de base d'un capteur intégré selon l'invention, adapté pour fournir directement un signal de niveau compatible avec les techniques de traitement électronique à l'aide de circuits intégrés tels que les circuits à microprocesseur.

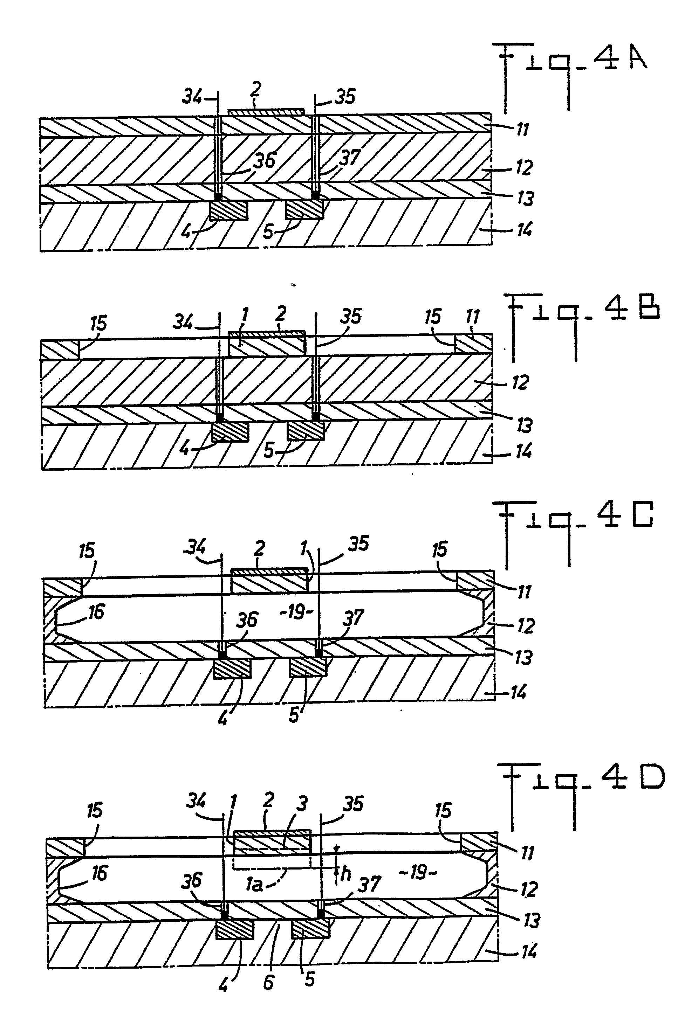

Le capteur 10, qui peut, notamment, constituer un accéléromètre, comprend un substrat de base 14 en silicium monocristallin, qui peut présenter une épaisseur classique de l'ordre de 100 à 500 μm et sur lequel est rapportée une première électrode 17 reliée à la masse. La surface supérieure du substrat 14 est recouverte d'une couche 13 d'oxyde thermique d'une épaisseur de l'ordre de 0,5 μm, elle-même surmontée d'une couche 12 de silicium polycristallin présentant une épaisseur de l'ordre de 1 μm. Une couche finale 11 d'oxyde de silicium, ou de nitrure de silicium, recouvre la couche de polysilicium 12. Une ouverture 18 en forme de "U" est réalisée dans la couche finale d'oxyde 11 et dans la couche de polysilicium 12, afin de définir, à l'intérieur du "U" 18 (fig. 2), une poutre allongée 1 qui constitue une partie de la couche finale d'oxyde 11 et se trouve séparée de la couche d'oxyde thermique 13 par une lame d'air 19, du fait que la couche de polysilicium 12 est elle-même supprimée, non seulement dans la zone "U" 18 qui entoure la poutre 1, mais également sous la poutre 1 qui peut ainsi présenter une flexibilité donnée. Une électrode 2 est déposée sur la face supérieure de la poutre 1.

Selon une variante de réalisation, la couche finale d'oxyde 11 est supprimée et l'électrode en métal ou alliage, qui est déposée directement sur la couche de polysilicium, constitue elle-même la lame flexible. Après création de l'ouverture en "U" 18 autour de la partie métallisée et enlèvement du polysilicium sous cette partie métallisée, la lame d'air 19 est alors définie par l'espace libre entre l'électrode 2 et la couche d'oxyde thermique 13 ou la face supérieure du substrat 14, dans le cas où la couche d'oxyde thermique 13 est absente.

Sous l'influence d'accélérations exercées dans une direction perpendiculaire aux faces principales du capteur 10, la poutre flexible 1 présente elle-même des déplacements dans le sens de la flèche des fig. 1, 3 et 4d et modifie la distance entre la face inférieure de la poutre 1 et la face supérieure de la couche d'oxyde thermique 13 qui est situé en regard.

Comme on peut le voir sur la fig. 2, la poutre 1 peut n'être rattachée au reste de la structure du capteur que par une extrémité, créant ainsi un élément en porte-à-faux. Selon une variante de réalisation, la poutre est rattachée au reste de la structure du capteur à ses deux extrémités et constitue alors un pont 1'. L'électrode 2', représentée en pointillés sur la fig. 2, s'étend ainsi d'une extrémité à l'autre de la poutre 1'.

Par ailleurs, bien que cela n'ait pas été représenté au dessin, une petite surcharge métallique, par exemple par dépôt électrolytique d'or ou d'un alliage, peut être déposée sur l'électrode 2 au voisinage de l'extrémité libre de la poutre 1, si celle-ci est en porte-à-faux ou au milieu de la poutre si celle-ci constitue un pont, pour augmenter la sensibilité s'il s'agit d'un accéléromètre. Une couche métallique épaisse peut également être déposée sur toute la longueur pour modifier les propriétés mécaniques de la poutre.

Pour une poutre 1 représentant une longueur comprise entre environ 50 et 100 μm et une épaisseur comprise entre environ 0,5 et 2 μm, les déplacements h de la poutre peuvent être de l'ordre d'une fraction à une centaine d'angströms. Ces déplacements, qui sont fonction de l'accélération à laquelle est soumis le capteur, induisent des variations de capacité entre l'électrode 2 solidaire de la poutre 1 et un ensemble 4, 5, 6 formant une autre armature de condensateur.

Selon l'invention, l'armature 4, 5, 6 n'est pas constituée par une zone homogène fortement dopée mais comprend, au contraire, des régions diffusées de source 4 et de drain 5 séparées par un canal conducteur 6. Les zones diffusées 4 et 5 s'étendent sous la couche d'oxyde thermique 13 à la partie supérieure du substrat 14 sur une épaisseur de l'ordre de 0,5 à 1 μm, sensiblement à l'aplomb des bords longitudinaux 111, 112, respectivement, de la poutre 1. Chaque zone diffusée 4, 5 s'étend de part et d'autre de la projection sur le substrat 14 du bord longitudinal correspondant 111, 112 de la poutre 1, sans toutefois qu'il y ait jonction des deux zones, comme dans une structure MOS classique. Des électrodes 34, 35 sont connectées, de façon classique, aux régions de source 4 et de drain 5. Une source 8 de tension de polarisation, de l'ordre de quelques volts, est connectée entre les électrodes de source 34 et de drain 35 (fig. 1). Sous l'action du champ électrique créé par l'électrode 2, disposée sur la poutre 1 et reliée à un pôle d'une source 9 de tension dont l'autre pôle est relié à l'électrode de substrat 17, un canal conducteur 6 est créé entre les régions de source 4 et de drain 5 assurant la circulation d'un courant qui peut être mesuré par un appareil de mesure 7 connecté en série avec la source de tension de polarisation 8. Ce courant varie en fonction de la capacité formée entre l'électrode 2 déposée sur la poutre flexible 1 et les régions de source et de drain 4, 5, c'est-à-dire en fonction de l'épaisseur de la lame d'air 19 déterminée par la position de la poutre 1. En fonction de la position de la poutre 1, la répartition des charges dans l'électrode 2 est modifiée, ce qui modifie la répartition des charges dans le canal 6 et, par là-même, modifie le courant électrique de conduction mesuré par l'appareil de mesure 7.

Selon une variante de réalisation, les charges électriques 3 présentes dans la poutre 1, en oxyde ou nitrure de silicium, peuvent être implantées directement au voisinage de la face en contact avec la lame d'air 19, pour créer un effet électret, ce qui permet de supprimer la source 9 de tension de polarisation prévue pour créer des charges au sein de l'électrode 2 et de connector directement l'électrode 2 à l'électrode du substrat 17, elle-même reliée à la masse.

Selon une autre variante de réalisation, on crée une structure à appauvrissement entre les zones de diffusion de drain et de source en formant un canal supplémentaire faiblement dopé entre ces zones de diffusion.

On notera que la présence des régions de source et de drain 4, 5, immédiatement sous la poutre 1, permettent de réaliser, directement, une détection sensible des variations de position de la poutre 1, tout en limitant les capacités parasites. Ainsi, la sensibilité du capteur est améliorée par rapport à celle des capteurs utilisant une armature de condensateur située sous la poutre en porte-à-faux et une structure MOS supplémentaire implantée dans une région du substrat 14 distincte de celle située immédiatement sous la poutre 1. Dans la structure de capteur selon l'invention, c'est, en effet, l'ensemble des régions diffusées 4, 5 et du canal 6 qui forme, d'une part, une armature de condensateur coopérant avec l'armature 2 constituée par l'électrode déposée sur la poutre 1 et, d'autre part, un composant électronique détecteur et amplificateur. La structure du capteur 10, avec l'électrode 2 de la poutre 1 et les électrodes 34 et 35 de source et de drain, peut être comparée à une structure MOS classique, dans laquelle une lame épaisse d'air 19 est adjointe à la mince couche d'oxyde (0) ou même remplace complètement celle-ci, la lame d'air 19 étant d'épaisseur variable du fait que l'électrode 2 est déposée sur la poutre flexible 1. Il s'ensuit que le capteur intégré 10 selon l'invention assure directement la détection de la variation d'une grandeur mécanique et son amplification pour fournir un niveau de signal suffisant pour un traitement ultérieur. Ce capteur présente ainsi une grande sensibilité, d'autant plus grande que l'espace libre entre la poutre 1 et la couche d'oxyde thermique 13 est plus réduit.

Par ailleurs, selon l'invention, les caractéristiques du capteur sont déterminées, de telle manière que l'on travaille loin de la résonance. Il est ainsi possible de détecter, de façon fiable, les déplacements de la lame flexible, sans que celle-ci soit trop sollicitée sur le plan mécanique. Ceci contribue à augmenter la durée de vie et est nécessaire à l'obtention d'une large bande passante du capteur.

On a décrit ci-dessus le cas d'un capteur intégré dans lequel la lame flexible 1 est soumise à des déplacements perpendiculaires à la face supérieure du substrat 14, les zones de diffusion de source 4 et de drain 5, non contiguës, étant formées parallèlement à la lame 1, de manière à s'étendre chacune sur une faible distance de part et d'autre de la projection sur le substrat 14, respectivement, de chacun des bords longitudinaux 111, 112 de la lame 1.

Comme on peut le voir sur la fig. 9, la lame flexible 1, si elle présente une largeur réduite, par exemple de l'ordre de quelques μm, peut être soumise à des déplacements parallèles à la face supérieure du substrat 14 et non plus perpendiculaire. Dans ce cas, les zones de diffusion de source 104 et de drain 105, représentées en pointillés sur la fig. 9, sont formées dans le substrat 14 sous la lame 1 en définissant entre elles un canal 106 perpendiculaire aux bords longitudinaux de la lame 1. Les zones de source 104 et de drain 105 doivent présenter une dimension, dans le sens transversal de la lame 1, qui correspond sensiblement à la largeur de la lame 1, laquelle est ainsi superposée aux zones de drain 105 et de source 104, au moins dans sa position d'équilibre.

On notera que, sur les figures du dessin, pour des raisons de clarté, on n'a pas représenté à une même échelle les différentes parties constitutives du capteur 10.

Ainsi, sur les fig. 1 et 3 à 8, on a dilaté en hauteur le capteur. Les espaces libres, situés de part et d'autre de la lame flexible 1, peuvent s'étendre sur plusieurs centaines de μm, tandis que l'épaisseur de l'espace libre 19, situé sous la lame flexible 1, ne dépasse pas quelques μm et se trouve, de préférence, voisine de 1 μm. De même, la longueur de la lame flexible 1 peut être de plusieurs centaines de μm lorsque celle-ci est reliée à la structure fixe par ses deux extrémités, tandis que sa largeur peut n'être que de l'ordre de 10 à 30 μm environ ou même plus réduite, dans le cas du mode de réalisation de la fig. 9.

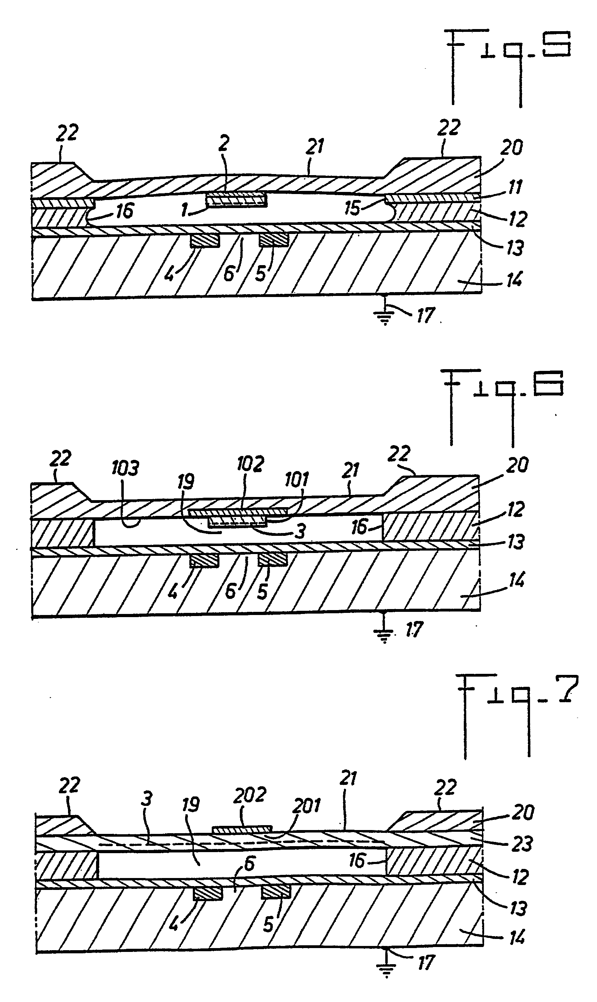

On décrira, ci-après, un procédé de fabrication d'un capteur intégré 10, conforme à la description ci-dessus, permettant, précisément, d'obtenir, à la fois une grande sensibilité de détection et une grande précision grâce à la réalisation d'une structure capacitive très reproductible à faible espace inter-armatures. Le procédé de fabrication sera décrit en référence à une structure, telle que celle représentée sur les fig. 1 et 3.

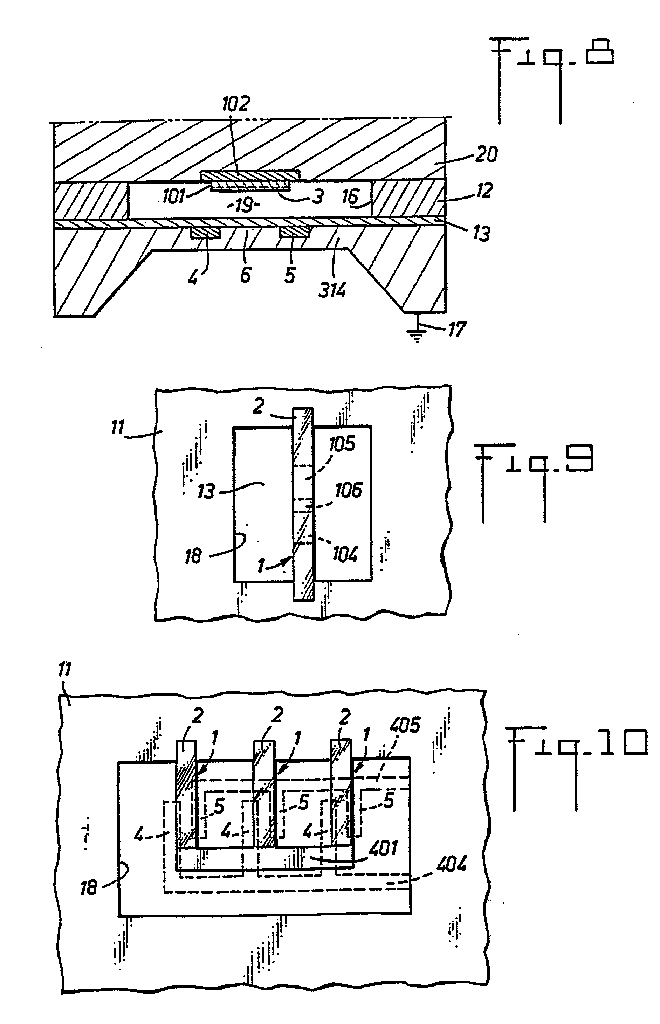

Comme on peut le voir de façon très schématique sur la fig. 4a, on forme sur un substrat 14 de silicium monocristallin deux zones de diffusion 4 et 5 situées au voisinage l'une de l'autre, mais non adjacentes et destinées à servir de zone de source et de drain, selon les technologies MOS classiques. Il est possible, en fonction des applications envisagées, de créer des zones de drain et de source correspondant à une structure MOS à canal N ou canal P et à enrichissement ou à appauvrissement. Dans ce dernier cas, non considéré sur les fig. 4a à 4d, une mince zone supplémentaire de diffusion est, en outre, créée entre les zones de source et de drain 4 et 5 pour former un canal à conduction permanente.

Après formation des zones de diffusion de source et de drain 4 et 5, on fait croître sur le substrat 14 une mince couche d'oxyde thermique 13, par exemple d'une épaisseur de l'ordre de 0,5 μm, puis on dépose une couche 12 de silicium polycristallin, dont l'épaisseur détermine l'épaisseur moyenne de la couche d'air 19 qui sera formée ensuite sous l'élément flexible 1 du capteur. Compte tenu du fait que l'épaisseur de la couche 12 de polysilicium peut être déterminée avec une grande précision, il en est de même de l'épaisseur de la couche d'air 19 qui contribue à déterminer la sensibilité du capteur. Il est avantageux de choisir une couche 12 dont l'épaisseur n'est pas trop grande et est de l'ordre de 1 μm.

Après dépôt de la couche 12 de polysilicium, on dépose ou fait croître sur celle-ci une couche 11 d'oxyde de silicium ou de nitrure de silicium, par exemple d'une épaisseur de 0,5 μm si l'on désire obtenir une lame flexible non entièrement métallique, puis on procède, selon les techniques classiques de photogravure, à l'ouverture des fenêtres 36, 37 à travers les couches 11, 12 et 13, pour former ensuite des connexions 34, 35 de liaison avec les zones de source et de drain 4, 5, par métallisation, par exemple avec de l'aluminium. On procède, en outre, à la métallisation d'une partie de la surface extérieure de la couche supérieure 11 d'oxyde ou de nitrure pour former une électrode 2 allongée qui est parallèle aux deux zones de source et de drain 4, 5, et, en projection sur ces zones de source et de drain 4, 5, se trouve entre celles-ci et les recouvre partiellement, à la manière d'une électrode de grille de structure MOS classique (fig. 4a). Dans une variante de réalisation, où la couche finale 11 est absente, la métallisation est réalisée directement sur la couche 12 de polysilicium.

Après les différentes étapes ayant conduit à la structure de la fig. 4a, on procède par photogravure à l'ouverture des fenêtres 15 dans la couche supérieure 11 d'oxyde ou de nitrure, de part et d'autre de l'électrode 2 et, dans le cas où la lame flexible devant être formée sous l'électrode est une poutre en porte-à-faux, une fenêtre est également ouverte du côté de l'extrémité libre de l'électrode 2, de manière à former une ouverture 15 correspondant à la configuration en "U" 18, représentée en traits pleins sur la fig. 2. Après l'étape d'ouverture des fenêtres 15, l'électrode 2 se trouve sur une portion 1 de la couche d'oxyde ou de nitrure 11 qui forme un relief sur la couche de polysilicium 12 (fig. 4b).

Selon une variante de réalisation, l'étape de photogravure, consistant à ouvrir les fenêtres 15 dans la couche d'oxyde ou de nitrure 11, peut être réalisée avant l'étape de métallisation conduisant à la formation de l'électrode 2. Le masquage nécessaire pour ouvrir les fenêtres 15 est alors réalisé en tenant compte de la formation ultérieure de l'électrode 2.

La fig. 4c représente une étape importante, conduisant à la formation d'une cavité, non seulement autour de l'électrode 2 supportée par l'élément résiduel 1 en oxyde ou nitrure, mais, également, sous cet élément résiduel 1, par attaque du polysilicium 12, pour créer un espace libre 19 et conférer une flexibilité à l'élément résiduel 1 qui est rattaché en un ou deux points au reste de la couche supérieure 11 pour former un pont ou une poutre en porte-à-faux.

La couche d'oxyde 13 sert de couche d'arrêt lors de l'attaque de la couche de polysilicium 12. Afin de permettre un dégagement total du polysilicium situé sous la poutre 1, même lorsque celle-ci est en forme de pont, on effectue une attaque au plasma dans des conditions qui rendent le processus fortement isotrope et sélectif par rapport à l'attaque de l'oxyde 13. Ainsi, avec une relativement faible densité de puissance et sous une pression relativement importante, de l'ordre de 6,65 à 13,3 Pa, une durée d'attaque de l'ordre de 10 à 60 min permet de former dans le polysilicium 12 une cavité 16 qui s'étend sous les fenêtres 15 et se prolonge latéralement de part et d'autre des fenêtres 15 sous la couche supérieure 11, de telle sorte que tout le polysilicium situé sous la lame flexible 1 en oxyde ou nitrure 11, recouverte de l'électrode 2, soit éliminé pour former l'espace libre 19.

Après l'attaque au plasma, on obtient la structure de base du capteur représenté sur la fig. 4c. Dans une étape supplémentaire, applicable, notamment, si la structure MOS est du type à enrichissement, on procède à l'implantation de charges électriques 3 dans la lame flexible 1 en oxyde ou nitrure, au voisinage de l'interface avec l'espace libre 19, de manière à produire un effet électret qui permet d'éviter une polarisation de l'électrode 2 formant grille (fig. 4d). L'implantation de charges peut être effectuée par canon électronique, par effet corona, ou sous l'effet d'une tension électrique appliquée aux électrodes en présence d'un rayonnement gamma.

Dans le cas de charges implantées 3, il convient de prévoir sur le substrat des moyens de butée empêchant la lame flexible de venir se coller par le silicium monocristallin.

Ces butées peuvent être constituées par la couche d'oxyde thermique.

Dans le cas où l'on n'envisage pas d'implantation de charges électriques 3 dans la lame flexible 1, cette dernière peut, éventuellement, être entièrement métallique. Le procédé de fabrication se distingue alors du procédé décrit ci-avant par le fait que, par attaque au plasma de la couche de polysilicium 12, on réalise directement un espace libre 19 entre la lame métallique flexible 1 et la couche d'oxyde thermique 13.

La structure de base des fig. 4c et 4d constitue un capteur accélérométrique complet, dans la mesure où, sous l'influence d'une accélération dans un sens perpendiculaire aux faces principales du capteur, la poutre flexible 1 présente un déplacement h et vient, par exemple, dans la position la représentée en pointillé sur la fig. 4d, modifiant ainsi l'épaisseur de la lame d'air 19, la distance entre les charges électriques 3 et le canal 6 et la conduction dans le canal 6 reliant les zones de source 4 et de drain 5. La variation de courant, circulant entre la source 4 et le drain 5, est bien une image de l'accélération à laquelle est soumise le capteur et, compte tenu de la combinaison de la structure MOS amplificatrice à la structure capacitive à capacité variable, constitue bien une information électrique significative.

On notera que le procédé décrit ci-avant se prête à la fabrication simultanée d'un grand nombre de capteurs 10, ayant la structure de base décrite ci-dessus, sur une même plaquette de silicium. Certaines étapes du procédé peuvent également être communes à la réalisation d'autres composants intégrés classiques sur la même plaquette de silicium, lesquels composants peuvent constituer une partie de circuits électroniques supplémentaires de traitement associés aux capteurs 10.

Les fig. 5 à 8 représentent des capteurs ayant une structure de base semblable à celle du capteur 10 précédemment décrit, mais adaptés à la mesure de forces ou de pressions. Pour la clarté des schémas, on n'a pas représenté sur les fig. 5 à 8 les électrodes de source et de drain.

La fig. 5 représente un capteur, tel que celui de la fig. 4d, sur lequel on a rapporté une plaquette en silicium 20 qui présente une partie périphérique soudée, de façon étanche, sur la partie restante de la couche d'oxyde ou de nitrure 11 du capteur 10 qui entoure la lame flexible 1. La plaquette 20 est amincie, dans sa partie centrale 21, pour constituer une membrane présentant une certaine flexibilité. L'épaisseur de la membrane 21 peut être comprise entre environ 1 et 40 µm et dont la surface est ajustée pour obtenir la flexibilité recherchée. La partie centrale de la membrane 21 est rendue solidaire de la lame flexible 1 par soudage. De la sorte, une pression, exercée sur la face extérieure de la membrane 21, provoque un déplacement de la lame flexible centrale 1 et, comme indiqué précédemment, une variation du courant entre drain 5 et source 4.

Les fig. 6 et 7 représentent des variantes du capteur de la fig. 5 à lame flexible 1 incorporée dans une membrane souple 21. Ces variantes de réalisation permettent de simplifier la fabrication de l'ensemble du capteur.

Ainsi, selon le mode de réalisation de la fig. 6, après l'étape de dépôt d'une couche de polysilicium 12 sur la couche d'oxyde 13, on ne procède pas à la formation d'une couche supplémentaire d'oxyde ou de nitrure 11, comme selon le mode de réalisation de la fig. 5, mais une étape de photogravure classique est effectuée pour éliminer le silicium polycristallin dans une zone s'étendant au-dessus et au voisinage des zones de diffusion 4, 5, la couche d'oxyde 13 servant de couche d'arrêt. Une large fenêtre 16 est alors constituée au niveau de la couche 12. La lame 1 est elle-même formée directement sur la plaquette de silicium supérieure 20 et vient s'engager dans la fenêtre 16, au-dessus des zones de source 4 et de drain 5, lorsque la partie périphérique 22 de la plaquette de silicium 20 est fixée directement sur la partie restante de la couche 12 de silicium polycristallin. La plaquette 20 est amincie pour former une membrane centrale 21, comme indiqué précédemment. Toutefois, une zone 102 de dopage au bore est réalisée dans la plaquette de silicium 20, avant soudage de celle-ci sur la couche 12. La zone dopée 102 constitue l'équivalent de l'électrode 2 de la fig. 5. Par ailleurs, une mince couche d'oxyde ou de nitrure est également formée sur la face 103 de la plaquette 20, puis limitée à une zone restreinte 101 superposée à la zone dopée au bore 102, pour constituer une lame flexible allongée 101 équivalente à la lame 1 de la fig. 5. Des charges électriques 3 peuvent être implantées dans la lame flexible 101 comme dans la lame 1. Une fois réalisée dans la membrane 21, la zone dopée formant électrode 102 et la lame flexible 101, la plaquette peut être rapportée sur la structure de base 12, 13, 14 par soudage de sa partie périphérique 22 sur la couche 12 de polysilicium. La lame flexible 101, incorporée à la membrane 21, est alors engagée dans la fenêtre 16 de la structure de base 12, 13, 14, de manière à faire face aux zones de source et de drain 4, 5, un espace libre 19 étant ménagé entre la lame 101 et la couche d'oxyde 13. Le fonctionnement du capteur de la fig. 6 est tout-à-fait analogue à celui de la fig. 5.

Comme cela a été indiqué précédemment, dans le cas des modes de réalisation des fig. 5 et 6, il est possible d'utiliser une lame flexible 1 entièrement métallique, qui ne comprend pas de couche d'oxyde ou de nitrure de silicium, s'il n'est pas envisagé d'implanter des charges électriques 3.

Le capteur de la fig. 7 ressemble à celui de la fig. 6, en ce qui concerne la structure de base 12, 13, 14 qui est réalisée à partir du substrat 14 de la façon indiquée ci-dessus en référence à la fig. 6. En revanche, la plaquette de silicium 20, qui est rapportée sur la structure de base, diffère légèrement de la plaquette de la fig. 6. Dans le mode de réalisation de la fig. 7, on fait d'abord croître sur le substrat de silicium 20, avant sa mise en place sur la structure de base 12, 13, 14, une couche d'oxyde thermique 23 sur toute la surface de celui-ci puis, cette couche d'oxyde 23 servant de couche d'arrêt, on procède à une attaque du silicium dans toute la zone centrale devant constituer la membrane souple. La membrane souple 21 est, dans ce cas, constituée par la partie centrale de la couche d'oxyde 23 qui est dégagée sur ses deux faces. Une électrode 202, par exemple en aluminium, est alors déposée sur la partie centrale de la couche d'oxyde 23 et des charges électriques 3 sont implantées dans la couche 23, du côté opposé à l'électrode 202, pour créer un effet électret. La membrane 21, munie de sa couche d'oxyde 23, est alors rapportée sur la structure de base 12, 13, 14, la partie de la couche d'oxyde thermique 23 qui reste, supportée par le substrat 22, étant soudée sur la couche 12 de silicium polycristallin de la structure de base. Dans ce cas, l'électrode 202 est également superposée aux zones de source 4 et de drain 5, comme dans une structure MOS, mais avec un espace libre supplémentaire entre les couches d'oxyde 23 et 13 jouxtant l'électrode 202 et les zones diffusées 4 et 5, respectivement. Des variations de pression ou de force, exercées sur la membrane souple 21, provoquent un déplacement de la partie centrale 201 de cette membrane située sous l'électrode 202 et, par là-même, une variation de l'épaisseur de l'espace libre 19. La partie centrale 201 de la membrane 21 joue ainsi un rôle analogue à celui des lames flexibles 1, 101 des fig. 5 et 6, pour provoquer une variation de l'épaisseur de l'espace libre 19 et, donc, de la conductivité du canal 6 entre source 4 et drain 5.

La fig. 8 représente un mode de réalisation voisin de ceux des fig. 5 à 7, mais dans lequel le substrat 314 est aminci dans sa partie comprenant les zones de source 4, de drain 5 et de canal 6, tandis que la plaquette 20, portant la lame 101 et l'électrode 102, est, au contraire, maintenue épaisse. Dans ce cas, la partie flexible susceptible de modifier l'épaisseur de l'espace libre situé entre la lame 101 et la surface supérieure du substrat portant la couche d'oxyde 13 est constituée par la partie centrale amincie du substrat 314 située en regard de la lame 101. Une modification de la force ou de la pression exercée sur la face inférieure du substrat 314 modifie ainsi la capacité interélectrodes et permet la délivrance d'un signal de détection, comme lorsqu'une force ou une pression est exercée sur la membrane 21 des modes de réalisation des fig. 5 à 7.

Dans les exemples décrits ci-dessus, le corps d'épreuve, soumis à des déplacements, était constitué par une lame unique ou une membrane. Il est toutefois possible de réaliser des corps d'epreuves constitués par un ensemble plus ou moins complexe de lames réunies entre elles.

Il est ainsi possible, à titre d'exemple, d'utiliser des lames 1 disposées en croix ou, comme représenté sur la fig. 10, constituant un réseau.

Sur la fig. 10, on voit trois lames 1 parallèles réunies à leur extrémité libre par une lame supplémentaire 401, portant chacune une électrode 2 et coopérant chacune avec des zones de source 4 et de drain 5 disposées comme décrit en référence à la fig. 3. Les différentes zones de source 4 et de drain 5 sont, respectivement, réunies entre elles par des zones diffusées supplémentaires de liaison 404, 405 comme représenté sur la fig. 10, ce qui définit deux peignes enchevêtrés. Les électrodes 2 sont également reliées entre elles.

Une telle structure présente, notamment, l'avantage de réduire la sensibilité aux accélérations latérales.

L'invention n'est pas limitée aux exemples décrits et représentés, car diverses modifications peuvent y être apportées sans sortir de son cadre, afin de rendre la structure sensible à des grandeurs que l'on peut transformer par ailleurs en déplacement ou force compatibles avec les caractéristiques du montage décrit.

## Revendications

1. Capteur intégré de grandeurs mécaniques à effet capacitif, comprenant un substrat (14) semi-conducteur monolithique muni d'une première électrode (17); une lame flexible (1) qui est réalisée dans un matériau non entièrement métallique, qui définit avec le substrat (14) un espace libre (19) et qui est susceptible de subir de faibles déplacements, de manière à modifier légèrement la position relative de la lame (1) par rapport au substrat en l'absence de résonance de la lame; une seconde électrode (2) disposée sur la face de la lame (1) opposée audit espace libre (19) et des moyens de détection d'un signal électrique significatif représentatif des variations de position de ladite lame flexible (1), caractérisé en ce que lesdits moyens de détection d'un signal électrique significatif comprennent des première et seconde zones de diffusion de source (4) et de drain (5), non contiguës, séparées par un canal (6) et formées parallèlement à la lame (1) dans la partie supérieure du substrat (14), et des électrodes (34, 35) reliées, respectivement, à la zone de source (4) et à la zone de drain (5), de manière à créer une structure du type métal isolant semi-conducteur dont l'électrode mobile (2) constitue la grille, et en ce que l'espace libre (19), situé entre la lame (1) et le substrat (14), présente une épaisseur comprise entre environ 0,2 et 3 μm et, de préférence, voisine de 1 μm.

2. Capteur intégré selon la revendication 1, caractérisé en ce que la lame flexible (1) est en oxyde ou nitrure de silicium.

3. Capteur intégré selon la revendication 2, caractérisé en ce qu'il comprend, en outre, par effet électret, une concentration de charges (3) réparties dans la lame (1).

4. Capteur intégré selon l'une quelconque des revendications 1 à 3, caractérisé en ce qu'il comprend une structure à appauvrissement créée entre les zones de diffusion de drain et de source, par formation d'un canal supplémentaire faiblement dopé entre ces zones de diffusion.

5. Capteur intégré selon l'une quelconque des revendications 1 à 4, caractérisé en ce que la lame (1) présente une longueur comprise entre environ 50 et 400 μm et une épaisseur comprise entre environ 0,5 et 2 μm.

6. Capteur intégré selon l'une quelconque des revendications 1 à 5, caractérisé en ce que le substrat (14) est en silicium monocristallin.

7. Capteur intégré selon l'une quelconque des revendications 1 à 6, caractérisé en ce qu'il comprend une couche d'oxyde thermique (13) formée sur la surface du substrat (14) opposée à la première électrode (17).

8. Capteur intégré selon l'une quelconque des revendications 1 à 7, caractérisé en ce que la lame flexible (1) est soumise à des déplacements perpendiculaires à la face supérieure du substrat (14).

9. Capteur intégré selon l'une quelconque des revendications 1 à 7, caractérisé en ce que la lame flexible (1) est soumise à des déplacements parallèles à la face supérieure du substrat (14).

10. Capteur intégré selon l'une quelconque des revendications 1 à 9, caractérisé en ce que les zones de diffusion de source (4) et de drain (5), non contiguës, sont formées parallèlement à la lame (1), de manière à s'étendre chacune sur une faible distance, de part et d'autre de la projection sur le substrat (14), respectivement de chacun des bords longitudinaux (111, 112) de la lame (1).

11. Capteur intégré selon la revendication 9, caractérisé en ce que les zones de diffusion de source (104) et de drain (105), non contiguës, sont formées sous la lame (1) en définissant entre elles un canal (106) perpendiculaire aux bords longitudinaux de la lame (1).

12. Capteur intégré selon l'une quelconque des revendications 1 à 11, caractérisé en ce que la lame flexible (1) présente, à ses deux extrémités, des points de liaison avec la structure fixe du capteur.

13. Capteur intégré selon la revendication 3, caractérisé en ce que les première et seconde électrodes (17, 2) sont reliées à un même potentiel et en ce que les électrodes (34, 35), associées aux zones de source (4) et de drain (5), sont prévues pour être reliées au circuit série constitué par une source de tension (8) et un dispositif de mesure de courant (7).

14. Capteur intégré selon l'une quelconque des revendications 1 à 13, caractérisé en ce qu'il est appliqué à un dispositif de mesure des accélérations.

15. Capteur intégré selon l'une quelconque des revendications 1 à 13, caractérisé en ce que la lame flexible (1) est incorporée dans une membrane souple en silicium (20) et en ce que ladite membrane (20) est soudée à sa périphérie (22) sur une couche (12) en silicium polycristallin, elle-même déposée sur le substrat (14), de telle manière que la lame (1) subisse des déplacements liés à la force ou à la pression exercées sur la face extérieure de la membrane souple (20).

16. Capteur intégré selon la revendication 15, caractérisé en ce que la membrane souple (20) est constituée par une plaquette de silicium oxydée ou non qui est amincie, au moins dans sa partie centrale (21), pour présenter une épaisseur comprise entre environ 1 et 40 μm.

17. Capteur intégré de grandeurs mécaniques à effet capacitif comprenant un mince substrat (314) semiconducteur monolithique muni d'une première électrode (17); une lame (101) réalisée en un matériau non métallique et définissant avec le substrat (314) un espace libre (19); une seconde électrode (102) disposée sur la face de la lame (101) opposée audit espace libre (19) et des moyens de détection d'un signal électrique significatif représentatif des variations de position relative du substrat (314) et de la lame (101), caractérisé en ce que le mince substrat (314) est flexible et susceptible de subir de faibles déplacements, de manière à constituer le corps d'épreuve et à modifier légèrement la position relative du substrat (314) par rapport à la lame (101) en l'absence de résonance du substrat, en ce que lesdits moyens de détection d'un signal électrique significatif comprennent des première et seconde zones de diffusion de source (4) et de drain (5), non contiguës, séparées par un canal (6) et formées parallèlement à la lame (101) dans la partie supérieure du substrat (314) et des électrodes (34, 35) reliées, respectivement, à la zone de source (4) et à la zone de drain (5), de manière à créer une structure du type métal isolant semi-conducteur dont la seconde électrode (102) constitue la grille et en ce que l'espace libre (19), situé entre la lame (101) et le substrat (314) présente une épaisseur comprise entre environ 0,2 et 3 μm et, de préférence, voisine de 1 μm.

18. Procédé de fabrication d'un capteur intégré selon l'une quelconque des revendications 1 à 10, comprenant les étapes suivantes:

a) formation de deux zones diffusées parallèles non contiguës, formant source (4) et drain (5) dans un substrat semi-conducteur (14) en silicium monocristallin, selon les technologies des structures MOS,

b) croissance d'une mince couche d'oxyde thermique (13) sur le substrat (14) muni de ses deux zones de source (4) et de drain (5),

c) dépôt d'une couche de polysilicium (12) d'une épaisseur correspondant à l'épaisseur de l'espace libre (19) à former dans le capteur,

c1) dépôt ou croissance d'une couche d'oxyde ou de nitrure de silicium (11) sur la couche de polysilicium (12),

d) formation de trous de contact vers les régions de drain et de source,

e) métallisation d'une partie de la surface de la couche d'oxyde ou de nitrure de silicium (11) pour former l'électrode allongée (2) et les chemins conducteurs de liaison à l'électrode allongée et aux électrodes de drain et de source (34, 35),

e1) photogravure de la couche d'oxyde ou de nitrure de silicium (11) pour former deux trous de contact de part et d'autre de l'électrode allongée, ainsi que, le cas échéant, au voisinage de l'extrémité libre de l'électrode,

f) attaque isotrope au plasma de la couche (13) de silicium polycristallin pour former un espace libre (19) entre la lame flexible (1) et la mince couche thermique (13) formant couche d'arrêt et pour éliminer le silicium polycristallin dans une zone (16) s'étendant au-delà des bords longitudinaux (111, 112) de l'électrode (2) et, le cas échéant, de l'extrémité libre de l'électrode (2).

19. Procédé selon la revendication 18, caractérisé en ce qu'après l'étape f) d'attaque au plasma de la couche de silicium polycristallin (12), on procède à une implantation de charges électriques (3) dans la lame (1) au voisinage de sa face opposée à l'électrode allongée (2) pour créer un effet électret.

20. Procédé selon l'une quelconque des revendications 18 et 19, caractérisé en ce que, dans l'étape a), en plus de la formation de deux zones de diffusion de drain et de source, on réalise un mince canal de diffusion reliant les deux dites zones de drain et de source pour créer une structure du type à appauvrissement.

## Claims

1. Integrated capacitive sensor for mechanical quantities, comprising a monolithic semiconductor substrate (14) equipped with a first electrode (17); a flexible plate (1) which is produced in a material not entirely metallic, which defines a free space (19) with the substrate (14) and which is liable to undergo small displacements, in order to alter slightly the relative position of the plate (1) with respect to the substrate in the absence of resonance from the plate; a second electrode (2) place on the face of plate (1) opposite said free space (19) and means for detecting a significant electric signal representing variations in the position of said plate (1), characterized in that said means for detecting a significant electric signal comprise first and second zones of diffusion of source (4) and of drain (5), which zones are not contiguous but separated by a channel (6) and formed in parallel to the plate (1) in the upper part of the substrate (14), and electrodes (34, 35) connected, respectively, to the source zone (4) and to the drain zone (5), in such a way as to create a structure of semiconductor insulating metal type of which the movable electrode (2) constitutes the gate, and in that the free space (19), situated between the plate (1) and the substrate (14), has a thickness ranging between about 0.2 and 3 μm, and preferably in the region of 1 μm.

2. Integrated sensor according to claim 1, characterized in that the flexible plate (1) is in silicon nitride or oxide.

3. Integrated sensor according to claim 2, characterized in that it further comprises, by electret effect, a concentration of loads (3) distributed in the plate (1).

4. Integrated sensor according to any one of claims 1 to 3, characterized in that it comprises a depletion structure created between the drain and source diffusion zones, by formation of an extra lightly doped channel between said diffusion zones.

5. Integrated sensor according to any one of claims 1 to 4, characterized in that the length of plate (1) is between 50 and 400 μm and its thickness is between about 0.5 and 2 μm.

6. Integrated sensor according to any one of claims 1 to 5, characterized in that the substrate (14) is in monocrystalline silicon.

7. Integrated sensor according to any one of claims 1 to 6, characterized in that it comprises a layer of thermal oxide (13) formed on the surface of the substrate (14) opposite the first electrcde (17).

8. Integrated sensor according to any one of claims 1 to 7, characterized in that the flexible plate (1) is made to move in perpendicular to the upper fare of the substrate (14).

9. Integrated sensor according to any one of claims 1 to 7, characterized in that the flexible plate (1) is made to move in parallel to the upper face of the substrate (14).

10. Integrated sensor according to any one of claims 1 to 9, characterized in that the non-contiguous zones of diffusion of source (4) and of drain (5) are formed in parallel to the plate (1), in such a way that each one extends over a small distance, on either side of the projection on the substrate (14) of, respectively, each one of the longitudinal edges (111, 112) of the plate (1).

11. Integrated sensor according to claim 9, characterized in that the non-contiguous zones of diffusion of source (104) and of drain (105) are formed under the plate (1) so as to define between them a channel (106) perpendicular to the longitudinal edges of the plate (1).

12. Integrated sensor according to any one of claims 1 to 11, characterized in that the flexible plate (1) is provided at its two ends with joining points for joining it to the fixed structure of the sensor.

13. Integrated sensor according to claim 3, characterized in that the first and second electrodes (17, 2) are connected to the same potential and in that the electrodes (34, 35) associated to the zones of source (4) and of drain (5), are designed to be connected to the series circuit constituted by a source of voltage (8) and a voltage measuring device (7).

14. Integrated sensor according to any one of claims 1 to 13, characterized in that it is applied to a device for measuring accelerations.

15. Integrated sensor according to any one of claims 1 to 13, characterized in that the flexible plate (1) is incorporated in a supple membrane in silicon (20) and in that said membrane (20) is sealed at its periphery (22) on a layer (12) in polycrystalline silicon, which latter is deposited on the substrate (14), such that the plate (1) is caused to move under the effect of the force or pressure exerted on the outer face of the supple membrane (20).

16. Integrated sensor according to claim 15, characterized in that the supple membrane (20) is constituted by an oxidized or non-oxidized board of silicon which is thinned down, at least in its center part (21), in such a way that its thickness is between about 1 and 40 μm.

17. Integrated capacitive sensor for mechanical quantities comprising a thin monolithic semiconductor substrate (314) equipped with a first electrode (17); a plate (101) produced in a non-metallic material and defining a free space (19) with the substrate (314); a second electrode (102) provided on the face of plate (101) opposite said free space (19) and means for detecting a significant electric signal representing variations in the relative position of the substrate (314) and of the plate (101), characterized in that the thin substrate (314) is flexible and liable to undergo displacements, in such a way as to constitute the test object and to alter slightly the relative position of the substrate (314) with respect to the plate (101) in the absence of substrate resonance, in that the means for detecting a significant electric signal comprise non-contiguous first and second zones of diffusion of source (4) and of drain (5), separated by a channel (6) and formed in parallel to the plate (101) in the upper part of substrate (314) and electrodes (34, 35) connected respectively to the zone of source (4) and to the zone of drain (5), in such a way as to create a structure of semiconductor insulating metal type, whose second electrode (102) constitutes the gate, and in that the thickness of the free space (19) situated between the plate (101) and substrate (314) ranges between about 0.2 and 3 μm, and is preferably in the region of 1 μm.

18. Process for manufacturing an integrated sensor according to any one of claims 1 to 10, comprising the following steps:

a) formation of two non-contiguous parallel diffused zones forming source (4) and drain (5) in a semiconductor substrate (14) in monocrystalline silicon according to the MOS structures technology,

b) growth of a thin layer of thermal oxide (13) on the substrate (14) provided with its two zones of source (4) and of drain (5),

c) deposition of a layer of polysilicon (12) of a thickness corresponding to the thickness of the free space (19) to be formed in the sensor,

c1) deposition or growth of a layer of silicon nitride or oxide (11) on the layer of polysilicon (12),

d) formation of contact holes toward the zones of drain and of source,

e) metallization of part of the surface of the layer of silicon oxide or nitride (11) in order to form the elongated electrode (2) and the conducting paths of connection with the elongated electrode and with the drain and source electrodes (34, 35),

e1) photo-etching of the silicon oxide or nitride layer (11) in order to form two holes on either side of the elongated electrode, as well as, if necessary, near the free end of the electrode,

f) isotropic plasma etching of the polycrystalline silicon layer (13) in order to form a free space (19) between the flexible plate (1) and the thin thermal layer (13) forming retention layer and to eliminate the polycrystalline silicon in a zone (16) extending beyond the longitudinal edges (111, 112) of the electrode (2) and, if necessary, of the free end of the electrode (2).

19. Process according to claim 18, characterized in that after the step f) of plasma etching of the polycrystalline silicon layer (12), an implantation of electric loads (3) is conducted in the plate (1) close to its face situated opposite the elongated electrode (2) in order to create an electret effect.

20. Process according to any one of claims 18 and 19, characterized in that, in step a), in addition to the formation of two zones of diffusion of drain and of source, a thin diffusion channel is produced which channel connects said two zones of drain and of source in order to create a depletion type structure.

## Patentansprüche

1. Integrierter Aufnehmer mechanischer Größen mit kapazitivem Effekt, der ein mit einer ersten Elektrode (17) versehenes monolithisches Halbleitersubstrat (14); ein flexibles Plättchen (1), das aus einem nicht völlig metallischem Material hergestellt ist, das mit dem Substrat (14) einen freien Zwischenraum (19) definiert und das sich zum Durchmachen geringer Verschiebungen derart eignet, um die relative Lage des Plättchens (1) gegenüber dem Substrat in der Abwesenheit von Resonanz des Plättchens leicht zu ändern; eine zweite Elektrode (2), die auf der dem freien Zwischenraum (19) entgegengesetzten Fläche des Plättchens (1) angeordnet ist, und Mittel zum Erfassen eines kennzeichnenden elektrischen Signals aufweist, das Lageänderungen des flexiblen Plättchens (1) wiedergibt; dadurch gekennzeichnet, daß die Mittel zum Erfassen eines kennzeichnenden elektrischen Signals eine erste und eine zweite Quelle (4)- und Senke (5)-Diffusionszone, die nicht aneinandergrenzend durch einen Kanal (6) getrennt und parallel zum Plättchen (1) im oberen Teil des Substrats (14) gebildet sind, und Elektroden (34, 35) aufweisen, die mit der Quellezone (4) bzw. der Senkezone (5) derart verbunden sind, um einen Aufbau des Typs Metall-Isolierstoff-Halbleiter zu schaffen, dessen bewegliche Elektrode (2) das Gate bildet, und daß der freie Zwischenraum (19), der zwischen dem Plättchen (1) und dem Substrat (14) liegt, eine Dicke im Bereich von etwa 0,2 bis 3 µm und vorzugsweise nahe 1 µm aufweist.

2. Integrierter Aufnehmer nach dem Anspruch 1, dadurch gekennzeichnet, daß das flexible Plättchen (1) aus Siliziumoxid oder -nitrid ist.

3. Integrierter Aufnehmer nach dem Anspruch 2, dadurch gekennzeichnet, daß er außerdem durch Elektreteffekt eine Konzentration von im Plättchen (1) verteilten Ladungen (3) aufweist.

4. Integrierter Aufnehmer nach irgendeinem der Ansprüche 1 bis 3, dadurch gekennzeichnet, daß er einen Verarmungsaufbau aufweist, der zwischen den Senke- und Quellediffusionszonen durch Bildung eines schwach dotierten, zusätzlichen Kanals zwischen diesen Diffusionszonen gebildet ist.

5. Integrierter Aufnehmer nach irgendeinem der Ansprüche 1 bis 4, dadurch gekennzeichnet, daß das Plättchen (1) eine Länge im Bereich von etwa 50 bis 400 µm und eine Dicke im Bereich von etwa 0,5 bis 2 µm aufweist.

6. Integrierter Aufnehmer nach irgendeinem der Ansprüche 1 bis 5, dadurch gekennzeichnet, daß das Substrat (14) aus einkristallinem Silizium ist.

7. Integrierter Aufnehmer nach irgendeinem der Ansprüche 1 bis 6, dadurch gekennzeichnet, daß er eine thermische Oxidschicht (13) aufweist, die auf der der ersten Elektrode (17) gegenüberliegenden Oberfläche des Substrats (14) gebildet ist.

8. Integrierter Aufnehmer nach irgendeinem der Ansprüche 1 bis 7, dadurch gekennzeichnet, daß das flexible Plättchen (1) zur Oberseite des Substrats (14) senkrechten Verschiebungen unterworfen wird.

9. Integrierter Aufnehmer nach irgendeinem der Ansprüche 1 bis 7, dadurch gekennzeichnet, daß das flexible Plättchen (1) zur Oberseite des Substrats (14) parallelen Verschiebungen unterworfen wird.

10. Integrierter Aufnehmer nach irgendeinem der Ansprüche 1 bis 9, dadurch gekennzeichnet, daß die nicht aneinandergrenzenden Quelle (4)- und Senke (5)-Diffusionszonen parallel zum Plättchen (1) derart gebildet sind, um sich jeweils bis zu einem geringen Abstand beiderseits der Projektion jeder der Längskanten (111 bzw. 112) des Plättchens (1) auf das Substrat (14) zu erstrecken.

11. Integrierter Aufnehmer nach dem Anspruch 9, dadurch gekennzeichnet, daß die nicht aneinandergrenzenden Quelle (104)- und Senke (105)-Diffusionszonen unter dem Plättchen (1) gebildet sind, wobei sie zwischen sich einen zu den Längskanten des Plättchens (1) senkrechten Kanal (106) begrenzen.

12. Integrierter Aufnehmer nach irgendeinem der Ansprüche 1 bis 11, dadurch gekennzeichnet, daß das flexible Plättchen (1) an seinen beiden Enden Verbindungspunkte mit dem festen Aufbau des Aufnehmers aufweist.

13. Integrierter Aufnehmer nach dem Anspruch 3, dadurch gekennzeichnet, daß die erste und die zweite Elektrode (17, 2) mit einem gleichen Potential verbunden sind und daß die zu den Quelle (4)- und Senke (5)-Zonen gehörenden Elektroden (34, 35) vorgesehen sind, um mit der Reihenschaltung verbunden zu werden, die aus einer Spannungsquelle (8) und einer Strommeßeinrichtung (7) gebildet wird.

14. Integrierter Aufnehmer nach irgendeinem der Ansprüche 1 bis 13, dadurch gekennzeichnet, daß er für eine Vorrichtung zur Messung von Beschleunigungen verwendet wird.

15. Integrierter Aufnehmer nach irgendeinem der Ansprüche 1 bis 13, dadurch gekennzeichnet, daß das flexible Plättchen (1) in einer biegsamen Siliziummembran (20) aufgenommen ist und daß diese Membran (20) an ihrem Umfang auf eine Schicht (12) aus polykristallinem Silizium aufgeschweißt ist, die ihrerseits auf dem Substrat (14) derart abgeschieden ist, daß das Plättchen (1) Verschiebungen durchmacht, die mit der Kraft oder dem Druck verknüpft sind, die auf die äußere Seite der biegsamen Membran (20) einwirken.

16. Integrierter Aufnehmer nach dem Anspruch 15, dadurch gekennzeichnet, daß die biegsame Membran (20) aus einem Plättchen aus oxidiertem oder nicht oxidiertem Silizium besteht, das wenigstens in ihrem mittlerem Teil (21) verdünnt ist, um eine Dicke im Bereich von etwa 1 bis 40 μm aufzuweisen.

17. Integrierter Aufnehmer mechanischer Größen mit kapazitivem Effekt, der ein mit einer ersten Elektrode (17) versehenes, dünnes monolithisches Halbleitersubstrat (314); ein Plättchen (101), das aus einem nichtmetallischen Material hergestellt ist und mit dem Substrat (314) einen freien Zwischenraum (19) definiert; eine zweite Elektrode (102), die auf der dem freien Zwischenraum (19) entgegengesetzten Fläche des Plättchens (101) angeordnet ist, und Mittel zum Erfassen eines kennzeichnenden elektrischen Signals aufweist, das Relativlageänderungen des Substrats (314) und des Plättchens (101) wiedergibt, dadurch gekennzeichnet, daß das dünne Substrat (314) flexibel und geeignet ist, geringe Verschiebungen durchzumachen derart, um den Probekörper zu bilden und um die relative Lage des Substrats (314) gegenüber dem Plättchen (101) in der Abwesenheit von Resonanz des Substrats leicht zu ändern; und daß die Mittel zum Erfassen eines kennzeichnenden elektrischen Signals eine erste und eine zweite Quelle (4)- und Senke (5)-Diffusionszone, die nicht aneinandergrenzend durch einen Kanal (6) getrennt und parallel zum Plättchen (101) im oberen Teil des Substrats (314) gebildet sind, und Elektroden (34, 35) aufweisen, die mit der Quellezone (4) bzw. der Senkezone (5) derart verbunden sind, um einen Aufbau des Typs Metall-Isolierstoff-Halbleiter zu schaffen, dessen zweite Elektrode (102) das Gate bildet, und daß der freie Zwischenraum (19), der zwischen dem Plättchen (101) und dem Substrat (314) liegt, eine Dicke im Bereich von etwa 0,2 bis 3 μm und vorzugsweise nahe 1 μm aufweist.

18. Verfahren zur Herstellung eines integrierten Aufnehmers nach irgendeinem der Ansprüche 1 bis 10, das die folgenden Schritte aufweist:

a) Bildung zweier paralleler, nicht aneinandergrenzender, Quelle (4) und Senke (5) bildender, diffundierter Zonen in einem Halbleitersubstrat (14) aus einkristallinem Silizium nach den Techniken der MOS-Strukturen,

b) Wachstum einer dünnen thermischen Oxidschicht (13) auf dem mit seinen zwei Quelle- und Senkezonen (4, 5) versehenen Substrat (14),

c) Abscheidung einer Polysiliziumschicht (12) einer Dicke, die der Dicke des im Aufnehmer zu bildenden freien Zwischenraumes (19) entspricht;

c1) Abscheidung oder Wachstum einer Schicht (11) aus Siliziumoxid oder -nitrid auf der Polysiliziumschicht (12),

d) Bildung von Kontaktlöchern zu den Senke- und Quellebereichen;

e) Metallisierung eines Teils der Oberfläche der Siliziumoxid- oder -nitridschicht (11) zur Bildung der länglichen Elektrode (2) und der Leiterbahnen zur Verbindung mit der länglichen Elektrode und den Senke- und Quelleelektroden (34, 35),

e1) Photogravur der Siliziumoxid- oder -nitridschicht (11) zum Bilden zweier Löcher beiderseits der länglichen Elektrode sowie ggf. in der Nähe des freien Endes der Elektrode,

f) isotroper Plasmaangriff der polykristallinen Siliziumschicht (12) zur Bildung eines freien Zwischenraumes (19) zwischen dem flexiblen Plättchen (1) und der eine Sperrschicht bildenden dünnen thermischen Schicht (13) und zur Entfernung des polykristallinen Siliziums in einer Zone (16), die sich jenseits der Längskanten (111, 112) der Elektrode (2) und ggf. des freien Endes der Elektrode (2) erstreckt.

19. Verfahren nach dem Anspruch 18, dadurch gekennzeichnet, daß man nach dem Schritt f) des Plasmaangriffs der polykristallinen Siliziumschicht (12) eine Implantierung elektrischer Ladungen (3) in das Plättchen (1) in der Nähe seiner der länglichen Elektrode (2) entgegengesetzten Fläche zur Erzeugung eines Elektreteffekts vornimmt.

20. Verfahren nach irgendeinem der Ansprüche 18 und 19, dadurch gekennzeichnet, daß man im Schritt a) außer der Bildung zweier Senke- und Quellediffusionszonen einen dünnen Diffusionskanal, der die Senke- und Quellezonen verbindet, zur Schaffung einer Struktur des Verarmungstyps herstellt.

Fig.1

Fig.2

Fig.3

Fig. 4A

Fig. 4B

Fig. 4C

Fig. 4D

Fig.5

Fig.6

Fig.7

Fig. 8

Fig. 9

Fig. 10